(19) Europäisches Patentamt
European Patent Office
Office européen des brevets

(11) **EP 1 225 109 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(51) Int Cl.⁷: **B60T 8/00**

(21) Anmeldenummer: **01130776.6**

(22) Anmeldetag: **22.12.2001**

(54) **Verfahren und Vorrichtung zum Koordinieren von Eingriffen in das Fahrverhalten eines Fahrzeugs**

Method and device for coordinating vehicle dynamics active control

Procédé et dispositif pour la coordination des régulations de la dynamique de mouvement d'un véhicule à moteur

(84) Benannte Vertragsstaaten:
**DE FR GB**

(30) Priorität: **18.01.2001 DE 10102002**

(43) Veröffentlichungstag der Anmeldung:
**24.07.2002 Patentblatt 2002/30**

(73) Patentinhaber: **ROBERT BOSCH GMBH**
**70442 Stuttgart (DE)**

(72) Erfinder:
• **Ehret, Thomas**
**71696 Moeglingen (DE)**
• **Gerdes, Manfred**
**71739 Oberrixingen (DE)**

(56) Entgegenhaltungen:
**DE-A- 4 200 061**          **DE-A- 4 218 034**
**DE-A- 19 623 596**

## Beschreibung

Die Erfindung betrifft ein Verfahren zum Koordinieren von Eingriffen in das Fahrverhalten eines Fahrzeugs mit den Schritten: Bestimmen des Schräglaufwinkels einer Vorderachse, Bestimmen des Reibwertes an der Vorderachse und Bestimmen eines Schräglaufwinkelschwellenwertes. Die Erfindung betrifft ferner eine Vorrichtung zum Koordinieren von Eingriffen in das Fahrverhalten eines Fahrzeugs mit Mitteln zum Bestimmen des Schräglaufwinkels einer Vorderachse, Mitteln zum Bestimmen des Reibwertes an der Vorderachse und Mitteln zum Bestimmen eines Schräglaufwinkelschwellenwertes.

## Stand der Technik

Es sind verschiedene Systeme bekannt, über welche auf automatischem Weg in das Fahrverhalten eines Fahrzeugs eingegriffen wird. Bekannte Systeme sind beispielsweise das Antiblockiersystem (ABS) und die Antischlupfregelung (ASR), welche dem Fahrer in längsdynamisch kritischen Situationen bei Bremsungen und Beschleunigungen unterstützend zur Seite stehen. Ebenso sind auch Systeme bekannt, die bei querdynamisch kritischen Situationen hilfreich sind. Beispielsweise unterstützen die Fahrdynamikregelung (FDR) und das elektronische Stabilitätsprogramm (ESP) den Fahrer sowohl bei längsdynamisch kritischen Situationen als auch bei querdynamisch kritischen Situationen.

In der DE 196 23 596 A1 wird erwähnt, dass eine aktive Bremsbetätigung der Stabilisierung des Fahrzeugs dient, also einer Übersteuerungstendenz oder einer Untersteuerungstendenz oder einer Schleudergefahr oder einem bereits eingetretenen Schleudern entgegenwirkt. Zur Gewinnung der Steuersignale werden beispielsweise Schräglaufwinkel gemessen und mit vorgewählten Schwellenwerten verglichen.

Aus der DE 42 18 034 A1 ist ein Verfahren zur Bestimmung des Kraftschlusspotentials eines Kraftfahrzeugs bekannt, welches eine kontinuierliche Bestimmung des Kraftschlusspotentials ermöglicht. Dies wird dadurch erreicht, dass zunächst die einen Fahrzustand des Fahrzeugs beschreibenden Größen ermittelt und in eine weiterverarbeitbare Form gebracht werden. Aus diesen Messwerten wird dann der aktuelle Fahrzustand bestimmt. Im nächsten Schritt wird aus den Messwerten und aus dem Fahrzustand ein Fahrbahnzustand bestimmt und anschließend aus Fahrzustand und Fahrbahnzustand ein augenblicklich herrschender Reibungsbeiwert prognostiziert. Aus dem Reibungsbeiwert kann nun ein vorhandenes Kraftschlusspotential hergeleitet werden.

Es sind ferner Systeme bekannt, welche das Fahrverhalten eines Fahrzeugs über Eingriffe in das Lenksystem beeinflusen ("fahrdynamisches Lenksystem" (FDL)). Ein solches fahrdynamisches Lenksystem erzeugt neben Komfortvorteilen und Handlingvorteilen auch eine Stabilisierung des Fahrverhaltens, wobei stabilisierende Eingriffe zusätzlich zu Eingriffen auf das Fahrzeug durch sonstige Systeme, wie zum Beispiel das ESP, vorgenommen werden. Dabei wird eine Überlagerung eines zusätzlichen Lenkwinkels auf die Vorderräder genutzt, um aus der gemessenen Giergeschwindigkeit und einem berechneten Giergeschwindigkeitssollwert und mit entsprechenden Regleralgorithmen eine komfortablere Stabilisierung als durch den ESP-Bremseingriff zu erreichen. Eine solche zusätzliche Stabilisierung über das fahrdynamische Lenksystem hat speziell bei hohen Reibwerten besondere Vorteile.

Problematisch bei der Koordination der verschiedenen Eingriffe ist jedoch, geeignete Parameter zu ermitteln, auf Grundlage derer entschieden werden kann, welcher Eingriff zu welcher Zeit der Eingriff ist, welcher die günstigsten Auswirkungen auf das Fahrverhalten des Fahrzeugs hat.

## Vorteile der Erfindung

Die Erfindung baut auf dem gattungsgemäße Verfahren dadurch auf, dass der Schräglaufwinkel mit dem Schräglaufwinkelschwellenwert verglichen wird und dass bei einem absoluten Schräglaufwinkel, welcher größer ist als der absolute Schräglaufwinkelschwellenwert, ein Eingriff über das Bremssystem und/oder das Antriebssystem des Fahrzeugs erfolgt. Da ab einem bestimmten Schräglaufwinkel eine weitere Vergrößerung des Schräglaufwinkels immer schwächere Kraftschlussvergrößerungen nach sich zieht, ist eine Regelung des Schräglaufwinkels über ein fahrdynamisches Lenksystem oberhalb des Schräglaufwinkelschwellenwertes nicht mehr sinnvoll. Vielmehr ist es nützlich, einen Eingriff über das Bremssystem und/oder das Antriebssystem des Fahrzeugs vorzunehmen, beispielsweise im Rahmen des ESP.

Dabei erfolgt bei einem absoluten Schräglaufwinkel, welcher kleiner ist als der absolute Schräglaufwinkelschwellenwert, kein Eingriff über das Bremssystem und/oder das Antriebssystem des Fahrzeugs, und es erfolgt ein Eingriff über ein fahrdynamisches Lenksystem des Fahrzeugs. Es liegt also eine Trennung der Eingriffe über beispielsweise das ESP und das fahrdynamische Lenksystem vor, wobei insbesondere ein ESP-Eingriff nicht erfolgt, wenn die Regelung allein auf der Grundlage des fahrdynamischen Lenksystems erfolgen kann.

Es ist vorteilhaft, wenn der Schräglaufwinkel der Vorderachse anhand der Gleichung

$$\alpha_v = \beta + \frac{v_{Gi} \cdot l_v}{v_{Fzref}} - \delta$$

geschätzt wird, wobei

$\alpha_v$ : Schräglaufwinkel
$\beta$ : Schwimmwinkel
$v_{Gi}$ : Drehrate des Fahrzeugs
$v_{Fzref}$ : Fahrzeuggeschwindigkeit
$\delta$ : Lenkwinkel an der Vorderachse.

Dabei wird die Drehrate des Fahrzeugs vorzugsweise gemessen, während der Schwimmwinkel und die Fahrzeuggeschwindigkeit geschätzt werden. Somit steht ein Schräglaufwinkel $\alpha_v$ zur Verfügung, welcher sich aus Größen bestimmen lässt, die im Rahmen von Systemen des Standes der Technik ohnehin zur Verfügung stehen.

Besonders vorteilhaft ist in diesem Zusammenhang, wenn der Schwimmwinkel durch Integration der Gleichung

$$\frac{\partial \beta(t)}{\partial t} = \frac{a_y}{v_{Fzref}} - v_{Gi}$$

abgeschätzt wird, wobei

$\beta$ : Schwimmwinkel
$a_y$ : Querbeschleunigung des Fahrzeugs

$V_{Fzref}$ : Fahrzeuggeschwindigkeit
$V_{Gi}$ : Drehrate des Fahrzeugs.

Wiederum ist die Drehrate des Fahrzeugs eine Messgröße, wobei die Fahrzeuggeschwindigkeit geschätzt ist. Die Querbeschleunigung des Fahrzeugs ist ebenfalls eine Messgröße. Die Integration der angegebenen Gleichung erfolgt durch spezielle Algorithmen unter vereinfachenden Annahmen, so dass letztlich ein Fahrzeugschwimmwinkelsignal $\beta(t)$ gewonnen wird.

Von besonderem Vorteil ist es, wenn der Reibwert an der Vorderachse anhand der Gleichung

$$\mu = \sqrt{a_x^2 + a_y^2}/g$$

abgeschätzt wird, wobei

$\mu$ : Reibwert
$a_x$ : Längsbeschleunigung des Fahrzeugs
$a_y$ : Querbeschleunigung des Fahrzeugs
$g$ : Erdbeschleunigung.

Die Erdbeschleunigung wird in bekannter Weise mit 9,81 m/s$^2$ angesetzt. Die Querbeschleunigung des Fahrzeugs wird gemessen und die Längsbeschleunigung wird letztlich geschätzt, wobei die Beziehung

$$a_x = \partial v_{Fzref}/\partial t$$

verwendet wird. Damit lässt sich eine Prognose über das Reifenverhalten ermitteln, so dass letztlich der Schräglaufwinkelschwellenwert abgeschätzt werden kann, welcher als Kriterium für die Verwendung der unterschiedlichen Eingriffe in die Fahrzeugdynamik verwendet wird.

Es ist besonders vorteilhaft, dass der Schräglaufwinkelschwellenwert als Schnittpunkt zweier Geraden bestimmt wird, wobei beide Geraden Tangenten an die Funktion "Kraftschluss gegen Schräglaufwinkel" sind und die erste Gerade eine Tangente im Ursprung ist und die zweite Gerade eine Tangente an den Sättigungsverlauf bei großem Schräglaufwinkel ist. Der typische Verlauf "Kraftschluss gegen Schräglaufwinkel" sieht so aus, dass bei niedrigem Schräglaufwinkel eine zuerst konstante Steigung des Kraftschlussverlaufes vorliegt, wobei die Funktion bei steigendem Schräglaufwinkel abflacht und eine Sättigung erreicht. Bei weiter ansteigendem Schräglaufwinkel ist mit einem Abfall des Kraftschlusses zu rechnen. Nimmt man nun zum Einen eine Gerade, die eine Tangente an die Funktion im Ursprung ist und zum Anderen eine Gerade, welche eine Tangente an den Sättigungsbereich ist, so ergibt sich durch den Schnittpunkt dieser beiden Linien ein reibwertabhängiger Schräglaufwinkel. Bei Schräglaufwinkeln, die größer sind als der so ermittelte Schräglaufwinkelschwellenwert zieht eine Vergrößerung des Schräglaufwinkels immer schwächere Kraftschlussvergrößerungen nach sich.

Es ist von besonderem Vorteil, wenn im Falle eines nicht aktiven fahrdynamischen Lenksystems der Schräglaufwinkelschwellenwert auf 0 gesetzt wird. In diesem Fall wird also unabhängig von den vorliegenden Reibwerten in jedem Fall die Aktivierung eines Eingriffs in das Bremssystem und/oder das Antriebssystem des Fahrzeugs ermöglicht.

Die Erfindung baut auf der gattungsgemäßen Vorrichtung dadurch auf, dass Mittel zum Vergleichen des Schräglaufwinkels mit dem Schräglaufwinkelschwellenwert vorgesehen sind und dass bei einem absoluten Schräglaufwinkel, welcher größer ist als der absolute Schräglaufwinkelschwellenwert, ein Eingriff über das Bremssystem und/oder das Antriebssystem des Fahrzeugs erfolgt. Da ab einem bestimmten Schräglaufwinkel eine weitere Vergrößerung des Schräglaufwinkels immer schwächere Kraftschlussvergrößerungen nach sich zieht, ist eine Regelung des Schräglaufwinkels über ein fahrdynamisches Lenksystem oberhalb des Schräglaufwinkelschwellenwertes nicht mehr sinnvoll. Vielmehr ist es nützlich, einen Eingriff über das Bremssystem und/oder das Antriebssystem des Fahrzeugs vorzunehmen, beispielsweise im Rahmen des ESP.

Der Erfindung liegt die überraschende Erkenntnis zugrunde, dass durch die Trennung der Eingriffe in das Bremssystem beziehungsweise das Antriebssystem des Fahrzeugs, beispielsweise auf der Grundlage des ESP, und der Eingriffe in ein fahrdynamisches Lenksystem große Komfortvorteile gewonnen werden. Unterhalb eines Schräglaufwinkelschwellenwertes ist vorgesehen, dass im Regelfall das ESP nicht eingreift, während bei einem Schräglaufwinkel oberhalb des Schräglaufwinkelschwellenwertes eine Anregelung des ESP erfolgt, da eine Beeinflussung des Lenkwinkels keinen wirkungsvollen Einfluss mehr auf das Fahrverhalten hätte.

## Zeichnungen

Die Erfindung wird nun mit Bezug auf die begleitenden Zeichnungen anhand bevorzugter Ausführungsformen beispielhaft erläutert.

Dabei zeigt:

Figur 1 ein Diagramm zur Erläuterung der Erfindung und

Figur 2 ein Flussdiagramm zur Erläuterung der Erfindung.

## Beschreibung der Ausführungsbeispiele

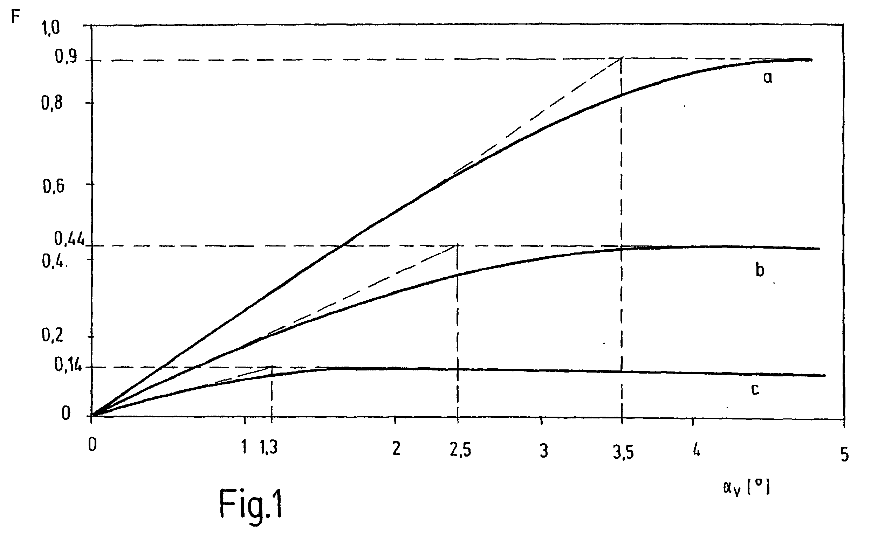

In Figur 1 ist ein Diagramm zur Erläuterung der Erfindung dargestellt. In dem Diagramm ist der Kraftschluss F gegen den Schräglaufwinkel $\alpha_v$ aufgetragen. Es sind drei verschiedene Verläufe eingetragen, wobei die Kurve a das Verhalten auf trockener Fahrbahn beschreibt, Kurve b beschreibt das Verhalten auf Schnee, und die Kurve c beschreibt das Verhalten auf Eis. Man erkennt, dass bei niedrigen Schräglaufwinkeln zunächst eine konstante Steigung des Kraftschlussverlaufes vorliegt. Bei steigendem Schräglaufwinkel flachen die Kurven ab, und sie erreichen schließlich eine Sättigung. Bei weiter ansteigendem Schräglaufwinkel ist mit einem Abfall des Kraftschlusses zu rechnen. Aus diesen Kurven lässt sich nun jeweils ein Schräglaufwinkelschwellenwert $\alpha_v$' ermitteln. Hierzu legt man an den Ursprung einer Kurve einer Tangente. Die andere Tangente wird an den Sättigungsbereich der Kurve gelegt. Der Schnittpunkt dieser beiden Kurven entspricht dem Schräglaufwinkelschwellenwert $\alpha_v$', von dem an eine weitere Vergrößerung des Schräglaufwinkels immer schwächere Kraftschlussvergrößerungen nach sich zieht. Für trockene Fahrbahn ergibt sich so beispielhaft ein Schräglaufwinkelschwellenwert von 3,5°. Bei Schnee ergibt sich ein Schräglaufwinkelschwellenwert von 2,5°, und auf Eis ergibt sich ein Schräglaufwinkelschwellenwert von 1,3°.

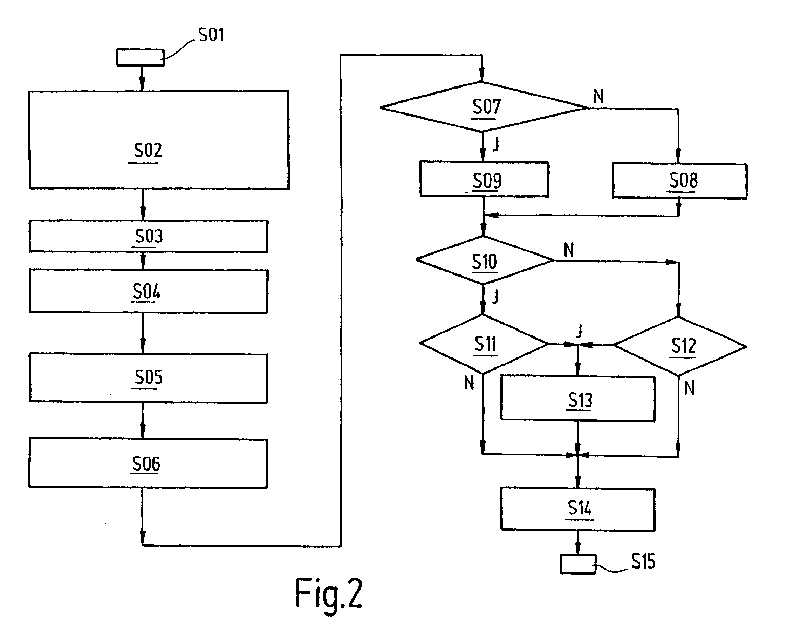

In Figur 2 ist ein Flussdiagramm zur Erläuterung der vorliegenden Erfindung dargestellt. Dabei bedeuten die Symbole für die Schritte im Einzelnen folgendes:

S01: Start
S02: Übergabe der Signale der Fahrdynamikregelung, beispielsweise: gefilterter Lenkwinkel; geschätzter Fahrzeugschwimmwinkel; geschätzte Fahrzeuggeschwindigkeit; gemessene Giergeschwindigkeit; geschätzter Reibwert; Variable "FahrzeuglenksystemRegelung aktiv"
S03: Schätzung Schräglaufwinkel Vorderachse
S04: Schräglaufwinkelschwellenwert für Reibwert 0 setzen
S05: Schräglaufwinkelschwellenwert für Reibwert 1 setzen
S06: Schräglaufwinkelschwellenwert ermitteln
S07: Fahrzeuglenksystemregelung aktiv = FALSE?
S08: Variable "Fahrzeuglenksystemstellreserve" auf TRUE setzen
S09: $\alpha_v$' auf 0 setzen; Variable "Fahrzeuglenksystemstellreserve" auf FALSE setzen
S10: $\alpha_v < 0$
S11: $\alpha_v > -\alpha_v$'
S12: $\alpha_v < \alpha_v$'
S13: elektronisches Stabilitätsprogramm nicht anregeln lassen: Variable "Anregeln" auf FALSE setzen; Variable "Fahrzeuglenksystemstellreserve" auf TRUE setzen
S14: Rückgabe der Fahrdynamikregelung-Signale: Variable "Fahrzeuglenksystemstellreserve"; Variable "Anregeln"
S15: Ende

Das Flussdiagramm zeigt beispielsweise einen Programmablauf für eine Eingriffskoordination ESP-FLS, das heißt eine Eingriffskoordination für den Betrieb im Rahmen eines elektronischen Stabilitätsprogramms und eines fahrdynamischen Lenksystems.

Bei Schritt S01 startet der Programmfluss.

In Schritt S02 werden der Routine die Signale der Fahrdynamikregelung übergeben. Beispielsweise handelt es sich dabei um einen gefilterten Lenkwinkel, einen geschätzten Fahrzeugschwimmwinkel, eine geschätzte Fahrzeuggeschwindigkeit, eine gemessene Giergeschwindigkeit und einen geschätzten Reibwert. Ferner wird die Variable "Fahrzeuglenksystemregelung aktiv" übergeben, welche die Werte TRUE oder FALSE annehmen kann. Die Schätzung des Fahrzeugschwimmwinkels $\beta$ erfolgt beispielsweise durch Integration der Gleichung

$$\frac{\partial \beta(t)}{\partial t} = \frac{a_y}{v_{Fzref}} - v_{Gi}$$

auf der Grundlage der gemessenen Fahrzeugquerbeschleunigung $a_y$, der geschätzten Fahrzeuggeschwindigkeit $v_{Fzref}$ und der gemessenen Drehrate des Fahrzeugs $v_{Gi}$.

Der Reibwert $\mu$ wird gemäß der Beziehung

$$\mu = \sqrt{a_x^2 + a_y^2}/g$$

unter Verwendung der geschätzten Längsbeschleuni-

gung $a_x = \partial_{Fzref} / \partial_t$, der gemessenen Querbeschleunigung $a_y$ und der Erdbeschleunigungskonstante $g = 9{,}81$ m/s$^2$ abgeschätzt.

In Schritt S03 wird der Schräglaufwinkel $\alpha_v$ der Vorderachse bestimmt, wobei vorzugsweise die Beziehung

$$\alpha_v = \beta + \frac{v_{Gi} \cdot l_v}{v_{Fzref}} - \delta$$

unter Verwendung des Lenkwinkels am Vorderrad $\delta$, des geschätzten Schwimmwinkels $\beta$ und des geometrischen Abstandes der Vorderachse zum Fahrzeugschwerpunkt $l_v$ verwendet wird.

In den Schritten S04 und S05 werden die Parameter zur Abgrenzung vorhandener oder nicht vorhandener Stellreserven festgelegt. In Schritt S04 wird beispielsweise der Niedrigstreibwert auf einen Schräglaufwinkel von 1° festgelegt. In Schritt S05 wird beispielhaft der Höchstreibwert auf einen Schräglaufwinkel von 5° festgelegt. Die Festlegung dieser Werte ist optimierbar.

In Schritt S06 wird der Schräglaufwinkelschwellenwert $\alpha_v'$ ermittelt, indem der Schnittpunkt der Tangente im Ursprung an die Kurve "Kraftschluss gegen Schräglaufwinkel" (siehe Figur 1) und der Tangente an den Sättigungsverlauf der Kurve "Kraftschluss gegen Schräglaufwinkel" bestimmt wird.

In Schritt S07 wird abgefragt, ob die Fahrzeuglenksystemregelung aktiv ist, indem die Variable "Fahrzeuglenksystemregelung aktiv" auf den Wert FALSE abgefragt wird. Hat der Wert der Variable "Fahrzeuglenksystemregelung aktiv" nicht den Wert FALSE, so wird in Schritt S08 die Variable "Fahrzeuglenksystemstellreserve" auf den Wert TRUE gesetzt. Wird in Schritt S07 bestimmt, dass die Variable "Fahrzeuglenksystemregelung aktiv" den Wert FALSE hat, so wird in Schritt S09 der Schräglaufwinkelschwellenwert $\alpha_v'$ auf 0 gesetzt. Ferner wird die Variable "Fahrzeuglenksystemstellreserve" auf FALSE gesetzt. In Schritt S10 wird geprüft, ob der Schräglaufwinkelschwellenwert $\alpha_v < 0$ ist. Ist dies der Fall, so wird in Schritt S11 geprüft, ob $\alpha_v > -\alpha_v'$ ist. Wird in Schritt S10 ermittelt, dass $\alpha_v$ nicht kleiner als 0 ist, so wird in Schritt S12 abgefragt, ob $\alpha_v$ kleiner ist als $\alpha_v'$. Wird jeweils auf die Abfragen in den Schritten S11 oder S12 mit ja geantwortet, so wird in Schritt S13 veranlasst, dass das ESP nicht anregelt. Eine Anregelvariable wird auf FALSE gesetzt, und die Variable "Fahrzeuglenksystemstellreserve" wird auf TRUE gesetzt. Nachfolgend geht der Programmablauf zu Schritt S14 über, wo die Fahrdynamikregelungssignale zurückgegeben werden, das heißt die Anregelvariable und die Variable "Fahrzeuglenksystemstellreserve". Wird in den Schritten S11 oder S12 auf die Abfragen mit nein geantwortet, so geht der Programmablauf sogleich zu Schritt S14 über. Folglich kann eine Anregelung des ESP erfolgen.

In Schritt S15 endet die Eingriffskoordination ESP-FLS.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

**Patentansprüche**

1. Verfahren zum Koordinieren von Eingriffen in das Fahrverhalten eines Fahrzeugs mit den Schritten

   - Bestimmen des Schräglaufwinkels $\alpha_v$ einer Vorderachse (S03),
   - Bestimmen des Reibwertes $\mu$ an der Vorderachse,
   - Bestimmen eines Schräglaufwinkelschwellenwertes $\alpha_v'$ (S06),

   wobei

   - der Schräglaufwinkel $\alpha_v$ mit dem Schräglaufwinkelschwellenwert $\alpha_v'$ verglichen wird und
   - bei einem absoluten Schräglaufwinkel $|\alpha_v|$, welcher größer ist als der absolute Schräglaufwinkelschwellenwert $|\alpha_v'|$, ein Eingriff über das Bremssystem und/oder das Antriebssystem des Fahrzeugs erfolgt und
   - bei einem absoluten Schräglaufwinkel $|\alpha_v|$, welcher kleiner ist als der absolute Schräglaufwinkelschwellenwert $|\alpha_v'|$, kein Eingriff über das Bremssystem und/oder das Antriebssystem des Fahrzeugs erfolgt und ein Eingriff über ein fahrdynamisches Lenksystem des Fahrzeugs erfolgt.

2. Verfahren nach Anspruch 1, **dadurch gekennzeichnet, dass** der Schräglaufwinkel der Vorderachse anhand der Gleichung

$$\alpha_v = \beta + \frac{v_{Gi} \cdot l_v}{v_{Fzref}} - \delta$$

geschätzt wird, wobei

   $\alpha_v$ : Schräglaufwinkel
   $\beta$ : Schwimmwinkel
   $v_{Gi}$ : Drehrate des Fahrzeugs
   $v_{Fzref}$ : Fahrzeuggeschwindigkeit
   $\delta$ : Lenkwinkel an der Vorderachse.

3. Verfahren nach einem der vorangehenden Ansprüche, **dadurch gekennzeichnet, dass** der Schwimmwinkel durch Integration der Gleichung

$$\frac{\partial \beta(t)}{\partial t} = \frac{a_y}{v_{Fzref}} - v_{Gi}$$

abgeschätzt wird, wobei

$\beta$ : Schwimmwinkel
$a_y$ : Querbeschleunigung des Fahrzeugs
$v_{Fzref}$ : Fahrzeuggeschwindigkeit
$v_{Gi}$ : Drehrate des Fahrzeugs.

4. Verfahren nach einem der vorangehenden Ansprüche, **dadurch gekennzeichnet, dass** der Reibwert an der Vorderachse anhand der Gleichung

$$\mu = \sqrt{a_x^2 + a_y^2}/g$$

abgeschätzt wird, wobei

$\mu$ : Reibwert
$a_x$ : Längsbeschleunigung des Fahrzeugs
$a_y$ : Querbeschleunigung des Fahrzeugs
$g$ : Erdbeschleunigung.

5. Verfahren nach einem der vorangehenden Ansprüche, **dadurch gekennzeichnet, dass** der Schräglaufwinkelschwellenwert $\alpha_v'$ als Schnittpunkt zweier Geraden bestimmt wird, wobei beide Geraden Tangenten an die Funktion "Kraftschluss F gegen Schräglaufwinkel $\alpha_v$" sind und die erste Gerade eine Tangente im Ursprung ist und die zweite Gerade eine Tangente an den Sättigungsverlauf bei großem Schräglaufwinkel $\alpha_v$ ist.

6. Verfahren nach einem der vorangehenden Ansprüche, **dadurch gekennzeichnet, dass** im Falle eines nicht aktiven fahrdynamischen Lenksystems der Schräglaufwinkelschwellenwert $\alpha_v'$ auf 0 gesetzt wird.

7. Vorrichtung zum Koordinieren von Eingriffen in das Fahrverhalten eines Fahrzeugs mit

- Mitteln zum Bestimmen des Schräglaufwinkels $\alpha_v$ einer Vorderachse,
- Mitteln zum Bestimmen des Reibwertes $\mu$ an der Vorderachse,
- Mitteln zum Bestimmen eines Schräglaufwinkelschwellenwertes $\alpha_v'$ (S06),

wobei

- der Schräglaufwinkel $\alpha_v$ mit dem Schräglaufwinkelschwellenwert $\alpha_v'$ verglichen wird und
- bei einem absoluten Schräglaufwinkel $|\alpha_v|$,

welcher größer ist als der absolute Schräglaufwinkelschwellenwert $|\alpha_v'|$, ein Eingriff über das Bremssystem und/oder das Antriebssystem des Fahrzeugs erfolgt und

- bei einem absoluten Schräglaufwinkel $|\alpha_v|$, welcher kleiner ist als der absolute Schräglaufwinkelschwellenwert $|\alpha_v'|$, kein Eingriff über das Bremssystem und/oder das Antriebssystem des Fahrzeugs erfolgt und ein Eingriff über ein fahrdynamisches Lenksystem des Fahrzeugs erfolgt.

**Claims**

1. Method for coordinating interventions into the driving behaviour of a vehicle having the steps

- determination of the slip angle $\alpha_v$ of a front axle (SO3),
- determination of the coefficient of friction $\mu$ at the front axle,
- determination of the slip angle threshold-value $\alpha_v'$ (S06), in which case
- the slip angle $\alpha_v$ is compared with the slip angle threshold-value $\alpha_v'$, and
- when there is an absolute slip angle $|\alpha_v|$ which is greater than the absolute slip angle threshold value $|\alpha_v'|$, an intervention is made by means of the brake system and/or the drive system of the vehicle and
- when there is an absolute slip angle $|\alpha_v|$ which is smaller than the absolute slip angle threshold-value $|\alpha_v'|$, an intervention is not made by means of the brake system and/or the drive system of the vehicle and an intervention is made by means of a dynamic steering system of the vehicle.

2. Method according to Claim 1, **characterized in that** the slip angle of the front axle is estimated according to the equation

$$\alpha_v = \beta + \frac{v_{Gi} \cdot l_v}{v_{Fzref}} - \delta$$

where

$\alpha_v$ : slip angle
$\beta$ : attitude angle
$V_{Gi}$ : rotational speed of the vehicle
$V_{Fzref}$ : speed of the vehicle
$\delta$ : steering angle at the front axle.

3. Method according to one of the preceding claims, **characterized in that** the attitude angle is estimated by integrating the equation

$$\frac{\partial \beta(t)}{\partial t} = \frac{a_y}{v_{Fzref}} - v_{Gi}$$

in which

$\beta$ :      attitude angle
$a_y$ :      lateral acceleration of the vehicle
$V_{Fzref}$ :      speed of the vehicle
$V_{Gi}$ :      rotational speed of the vehicle.

4. Method according to one of the preceding claims, **characterized in that** the coefficient of friction at the front axle is estimated by means of the equation

$$\mu = \sqrt{a_x^2 + a_y^2} / g$$

in which

$\mu$ :      coefficient of friction
$a_x$ :      longitudinal acceleration of the vehicle
$a_y$ :      lateral acceleration of the vehicle
$g$ :      acceleration of the earth.

5. Method according to one of the preceding claims, **characterized in that** the slip angle threshold-value $\alpha_v'$ is determined as a point of intersection between two straight lines, both straight lines being tangents to the function "frictional locking F with respect to slip angle $\alpha_v$'" and the first straight line being a tangent at the origin, and the second straight line being a tangent to the saturation profile with large slip angle $\alpha_v$.

6. Method according to one of the preceding claims, **characterized in that** in the case of a non-active dynamic steering system, the slip angle threshold-value $\alpha_v'$ is set to 0.

7. Device for coordinating interventions into the driving behaviour of a vehicle having

   - means for determining the slip angle $\alpha_v$ of a front axle,
   - means for determining the coefficient of friction $\mu$ at the front axle,
   - means for determining a slip angle threshold-value $\alpha_v'$ (SO6), in which case
   - the slip angle $\alpha_v$ is compared with the slip angle threshold-value $\alpha_v'$, and
   - when there is an absolute slip angle $|\alpha_v|$ which is greater than the absolute slip angle threshold-value $|\alpha_v'|$, an intervention is made by means of the brake system and/or the drive system of the vehicle, and
   - when there is an absolute slip angle $|\alpha_v|$ which is smaller than the absolute slip angle thresh-

old-value $|\alpha_v'|$, an intervention is not made by means of the brake system and/or the drive system of the vehicle, and an intervention is made by means of a dynamic steering system of the vehicle.

## Revendications

1. Procédé pour coordonner des interventions dans le comportement de conduite d'un véhicule, comprenant les étapes suivantes :

   - déterminer l'angle de dérive $\alpha_v$ d'un essieu avant (S03),
   - déterminer le coefficient de frottement $\mu$ à l'essieu avant,
   - déterminer un seuil d'angle de dérive $\alpha_v'$ (S06),

   selon lequel

   - l'angle de dérive $\alpha_v$ est comparé au seuil d'angle de dérive $\alpha_v'$ et
   - en présence d'une valeur absolue $|\alpha_v|$ de l'angle de dérive plus grande que la valeur absolue du seuil d'angle de dérive $|\alpha_v'|$, on produit une intervention par l'intermédiaire du système de freinage et/ou du système de propulsion du véhicule, ou
   - en présence d'une valeur absolue $|\alpha_v|$ de l'angle de dérive plus petite que la valeur absolue du seuil d'angle de dérive $|\alpha_v'|$, aucune intervention ne se produit ni par l'intermédiaire du système de freinage ni du système de propulsion du véhicule, mais on produit une intervention par l'intermédiaire d'un système de direction du véhicule qui travaille en dynamique de conduite.

2. Procédé selon la revendication 1,
   **caractérisé en ce que**
   l'angle de dérive de l'essieu avant est estimé sur la base de l'équation avec

$$\alpha_v = \beta + \frac{v_{Gi} - \ell_v}{v_{fzref}} - \delta$$

   $\alpha v$      : angle de dérive
   $\beta$      : angle de flottement
   $V_{Gi}$      : vitesse de giration du véhicule
   $V_{Fzref}$      : vitesse du véhicule
   $\delta$      : angle de braquage sur l'essieu avant
   $lv$      : distance de l'essieu avec centre de gravité du véhicule.

3. Procédé selon une des revendications précédentes,

**caractérisé en ce que**
l'angle de flottement est estimé par intégration de l'équation
avec

$$\frac{\partial \beta(t)}{\partial t} = \frac{a_y}{v_{fzref}} - v_{Gi}$$

$\beta$ : angle de flottement
$a_y$ : accélération transversale du véhicule
$V_{Fzref}$ : vitesse du véhicule
$V_{Gi}$ : vitesse de giration du véhicule.

4. Procédé selon une des revendications précédentes,
   **caractérisé en ce que**
   le coefficient de frottement à l'essieu avant est estimé sur la base de l'équation

$$\mu = \sqrt{a_x^2 + a_y^2}|g$$

   avec

   $\mu$ : coefficient de frottement
   ax : accélération longitudinale du véhicule
   $a_y$ : accélération transversale du véhicule
   g : accélération terrestre.

5. Procédé selon une des revendications précédentes,
   **caractérisé en ce que**
   le seuil d'angle de dérive $\alpha_v$' est défini par le point d'intersection de deux droites, les deux droites étant des tangentes à la fonction « liaison de force F en fonction de l'angle de dérive $\alpha_v$", la première droite étant une tangente à l'origine et la deuxième droite une tangente à la courbe de saturation en présence d'un grand angle de dérive $\alpha_v$.

6. Procédé selon une des revendications précédentes,
   **caractérisé en ce que**
   dans le cas où le système de direction qui travaille en dynamique de la conduite n'est pas actif, le seuil d'angle de dérive $\alpha_v$' est fixé à zéro.

7. Dispositif pour coordonner des interventions sur le comportement de conduite d'un véhicule, comprenant :

   - des moyens pour déterminer l'angle de dérive $\alpha_v$ d'un essieu avant (S03),
   - des moyens pour déterminer le coefficient de frottement $\mu$ à l'essieu avant,
   - des moyens pour déterminer un seuil d'angle de dérive $\alpha_v$' (S06),

dans lequel

- l'angle de dérive $\alpha_v$ est comparé au seuil d'angle de dérive $\alpha_v$' et
- en présence d'une valeur absolue $|\alpha_v|$ de l'angle de dérive plus grande que la valeur absolue du seuil d'angle de dérive $|\alpha_v'|$, on produit une intervention par l'intermédiaire du système de freinage et/ou du système de propulsion du véhicule, ou
- en présence d'une valeur absolue $|\alpha_v|$ de l'angle de dérive plus petite que la valeur absolue du seuil d'angle de dérive $|\alpha_v'|$, aucune intervention ne se produit par l'intermédiaire du système de freinage ni du système de propulsion du véhicule, mais on produit une intervention par l'intermédiaire d'un système de direction du véhicule qui travaille en dynamique de conduite.

Fig.1

Fig.2

EP 1 225 109 B1